# FASCICULE DE BREVET EUROPEEN

(11) **EP 0 493 211 B1**
(45) Date de publication et mention de la délivrance du brevet: **07.06.1995**
(21) Numéro de dépôt: 91403461.6
(22) Date de dépôt: 19.12.1991
(51) Int. Cl.: B64G 1/64

(54) **Mécanisme de mise en tension, libérable à distance**
Ferngesteuerter Mechanismus zur Unterspannungsetzung
Remotely releasable tensioning means

(30) Priorité: 21.12.1990 FR 9016171
(43) Date de publication de la demande: 01.07.1992
(73) Titulaire: AEROSPATIALE Société Nationale Industrielle, 75781 Paris Cédex 16 (FR)
(72) Inventeur: Claramonte, Manuel, F-92370 Chaville (FR); Bonnet, Guy, F-78250 Hardricourt (FR)
(74) Mandataire: Poulin, Gérard

(56) Documents cités:
- WO-A-87/07235
- US-A- 3 964 774

## Description

L'invention concerne un mécanisme permettant d'assurer la mise en tension d'un organe souple du type sangle, câble, etc., d'une manière apte à être libéré par une commande à distance. L'invention concerne également un dispositif permettant de raccorder de façon rigide deux ensembles mécaniques au moyen d'un ou plusieurs organes souples dont les extrémités adjacentes sont reliées à l'aide d'un tel mécanisme de mise en tension.

Le mécanisme de mise en tension et le dispositif de raccordement rigide selon l'invention sont particulièrement adaptés pour être utilisés dans toutes les applications aéronautiques et spatiales. Ces applications ne doivent cependant pas être considérées comme limitatives.

Pour commander la libération à distance d'un mécanisme de mise en tension, différentes solutions peuvent être envisagées.

Une première de ces solutions consiste à utiliser un ou plusieurs électro-aimants. Cependant, ces électro-aimants deviennent rapidement lourds dès que les efforts à appliquer sont importants, ce qui constitue un handicap important dans le cas des applications aéronautiques et spatiales. De plus, ils sont très sensibles aux phénomènes de frottement et aux ambiances vibratoires.

On peut aussi envisager d'avoir recours à des systèmes pneumatiques pour assurer la libération de tels mécanismes. De tels systèmes sont efficaces, mais ils présentent l'inconvénient d'être encombrants, ce qui est rédhibitoire pour de nombreuses applications.

La solution la plus fréquemment utilisée dans les domaines aéronautique et spatial consiste à avoir recours à un dispositif pyrotechnique, qui présente l'avantage de délivrer une force très importante sous un volume très réduit. Cette solution classique présente cependant certains inconvénients :
a) les dispositifs pyrotechniques engendrent des chocs, lors de leur allumage, qui se propagent dans les structures mécaniques voisines et peuvent altérer ou détruire des composants fragiles ;
b) ces dispositifs produisent des gaz de combustion à très haute température et sous très forte pression, qui peuvent toujours échapper accidentellement aux barrières d'étanchéité et polluer l'environnement ;
c) les dispositifs pyrotechniques ne permettent pas de contrôle fonctionnel non destructif ; il faut donc appréhender statistiquement la conformité des performances de ces dispositifs en procédant à des essais destructifs par prélèvement de certains d'entre eux dans le lot de fabrication, ce qui entraîne des coûts élevés ;
d) leur durée de vie est limitée par des phénomènes chimiques d'altération lente des compositions pyrotechniques et par la dégradation des joints d'étanchéité, lorsque le dispositif en comporte ;
e) lorsqu'une redondance est nécessaire, les composants pyrotechniques d'initiation doivent également être doublés, ce qui complique notablement la géométrie du dispositif et pénalise à la fois son poids et son encombrement ;
f) si l'énergie nécessaire à la commande électrique des dispositifs pyrotechniques est très faible, car la durée de fonctionnement de l'allumage est très courte (de l'ordre de la milliseconde), l'intensité du courant est, par contre, importante (entre 6 et 8 A pour un dispositif redondant), ce qui est pénalisant, dans certains cas, pour le dimensionnement de l'alimentation électrique ;
g) la conception de la commande électrique nécessite une protection par un circuit qui coupe l'alimentation après le passage d'un ordre, car il peut se produire un court-circuit à l'intérieur même de l'initiateur pyrotechnique ;
h) les composants pyrotechniques sont sensibles aux parasites électriques, ce qui impose de prendre des précautions particulières ;
i) les manipulations des dispositifs pyrotechniques sont soumises à une réglementation de sécurité pour la aise en oeuvre, qui impliquent par exemple un personnel spécialisé d'artificiers et le stockage dans des zones normalisées pour tous les matériels qui en sont équipés, ce qui alourdit et rend sensiblement plus coûteuse l'utilisation de ce matériel.

Le document US-A-3 964 774 décrit un mécanisme conforme au préambule de la revendication 1.

La présente invention a précisément pour objet un mécanisme de mise en tension d'un organe souple tel qu'une sangle ou un câble, dont la libération est commandée d'une manière originale, de telle sorte que les inconvénients des solutions existantes telles que l'encombrement, le prix, la production de chocs, la libération de gaz de combustion, etc. sont supprimés.

Ainsi, dans la définition la plus large de l'invention, il est proposé un mécanisme de mise en tension d'un organe souple, comprenant :
- un organe de verrouillage articulé par un premier axe sur une extrémité de l'organe souple ; et
- un organe de mise en tension articulé par un deuxième axe sur l'organe de verrouillage et relié à une structure d'ancrage ;
ce mécanisme étant caractérisé par le fait qu'il est libérable à distance et comprend, de plus :
- des moyens de liaison thermo-fusibles, aptes à maintenir l'organe de verrouillage dans une position angulaire prédéterminée par rapport à ladite extrémité, cette position étant proche d'une position limite d'équilibre stable, dans laquelle le premier axe est placé entre la structure d'ancrage et le deuxième axe, dans un plan contenant ce dernier et dans lequel s'exercent des efforts de tension qui transitent par l'organe de mise en tension ; et
- des moyens de chauffage montés à proximité des moyens de liaison thermo-fusibles et dont un actionnement a pour effet de faire fondre ces derniers.

Dans un mécanisme ainsi réalisé, la tension est relâchée par la fusion des moyens de liaison thermo-fusibles commandée par l'actionnement des moyens de chauffage. Il est clair que ce mécanisme est particulièrement simple, fiable, peu encombrant et peu coûteux.

De plus, la commande de libération de la tension ne provoque pas de choc et n'entraîne pas de risque de pollution par des gaz de combustion. Par ailleurs, le mécanisme peut être réutilisé, ce qui permet notamment d'effectuer des essais non destructifs. En outre, sa durée de vie n'est pas limitée par des éléments constitutifs sensibles et la redondance peut être aisément satisfaite en réalisant les moyens de chauffage sous la forme de plusieurs éléments chauffants aptes à commander la fusion des moyens de liaison indépendamment l'un de l'autre.

Il est également important de noter que l'énergie électrique de commande ainsi que l'intensité du courant nécessaire peuvent être très faibles (quelques centaines de mA), de telle sorte que le dimensionnement de l'alimentation électrique reste limité.

Enfin, le mécanisme de mise en tension conforme à l'invention est insensible aux parasites électriques et il peut être manipulé et stocké sans aucune contrainte particulière.

Dans un premier mode de réalisation de l'invention, la position angulaire prédéterminée dans laquelle l'organe de verrouillage est normalement maintenu par les moyens de liaison thermo-fusibles correspond à une position instable. Dans ce cas, la libération du mécanisme est obtenue automatiquement sans qu'il soit nécessaire d'ajouter une pièce mécanique telle qu'un ressort. Cette solution procure donc une fiabilité maximum pour un coût aussi réduit que possible. Cependant, la tension de l'organe souple ne peut pas excéder un seuil correspondant à la contrainte maximum supportée par les moyens de liaison thermo-fusibles.

Dans un deuxième mode de réalisation de l'invention, la position angulaire prédéterminée de l'organe de verrouillage correspond à une position stable et des moyens élastiques agissent sur cet organe de verrouillage pour tendre à le faire tourner autour du premier axe vers sa position instable. A l'inverse de la précédente, cette solution permet de s'affranchir de la tension de l'organe souple, puisque ce sont les moyens élastiques qui doivent être choisis afin de ne pas excéder la contrainte maximum supportée par les moyens de liaison thermo-fusibles. Cependant, cette solution présente une fiabilité moindre et un coût plus élevé que la précédente puisqu'une pièce mécanique supplémentaire est introduite dans le mécanisme.

Dans la pratique, le premier axe est de préférence articulé sur une pièce d'accrochage sur laquelle est fixée l'extrémité de l'organe souple, cette pièce d'accrochage comportant une partie en creux dans laquelle est reçue une partie en saillie de l'organe de verrouillage, dans ladite position angulaire prédéterminée.

Les moyens de liaison thermo-fusibles comprennent alors avantageusement un matériau thermo-fusible interposé entre la partie en creux et la partie en saillie.

Lorsqu'on désire être certain qu'aucune pollution ne se produise à l'extérieur du mécanisme lors de sa libération, comme c'est notamment le cas dans les applications aéronautique et spatiale, un joint racleur est monté sur la pièce d'accrochage, à l'entrée de la partie en creux. Ce joint, qui est en contact avec la partie en saillie, permet de maintenir le matériau fusible à l'intérieur de la partie en creux lors de la fusion de ce matériau.

De préférence, les moyens de chauffage comprennent au moins un élément chauffant tel qu'un élément à coefficient de température positif, monté dans la pièce d'accrochage, à proximité de la partie en creux.

L'utilisation de thermistances à coefficient de température positif, parcourues par un courant électrique, pour réaliser la fusion du matériau thermo-fusible, présente de nombreux avantages. Tout d'abord, ces éléments sont très fiables et très compacts. De plus et de façon essentielle, ils présentent la particularité d'avoir une résistance ohmique sensiblement constante jusqu'à une valeur seuil de température, au-delà de laquelle la résistance augmente très rapidement. Le dépassement de cette température est donc pratiquement impossible, ce qui permet d'assurer automatiquement la régulation de la température à cette valeur maximale. En outre, cette température maximale est très reproductible et très précise et elle peut être ajustée à la température de fusion du matériau thermo-fusible en choisissant pour réaliser l'élément chauffant un matériau dont la température maximale est légèrement supérieure à cette température de fusion.

L'utilisation d'une thermistance à coefficient de température positif permet également de ne pas avoir à prévoir de couper l'alimentation immédiatement après la mise en oeuvre du mécanisme de libération, car un tel élément coupe pratiquement le courant dès que sa température maximale est atteinte.

L'invention a aussi pour objet un dispositif de raccordement rigide, libérable à distance, de deux ensembles mécaniques comportant chacun une pièce de raccordement dont le contour forme une courbe convexe, par exemple circulaire. Ce dispositif est caractérisé par le fait qu'il comprend au moins un organe souple et un ensemble de mise en tension de cet organe, entourant les pièces de raccordement des deux ensembles mécaniques, l'ensemble de mise en tension comprenant au moins un mécanisme de mise en tension conforme à l'invention, la pièce d'accrochage de ce mécanisme présentant une empreinte dans laquelle sont normalement maintenues les pièces de raccordement.

On décrira maintenant, à titre d'exemple non limitatif, deux modes de réalisation de l'invention, en se référant aux dessins annexés, dans lesquels :
- la figure 1 est une vue en perspective représentant de façon schématique le raccordement de deux ensembles mécaniques à l'aide d'un dispositif de raccordement conforme à l'invention, ce dispositif étant représenté dans sa position de raccordement en trait plein et dans sa position de libération en traits discontinus ;
- la figure 2 est une vue en perspective, partiellement écorchée, représentant un ensemble de mise en tension utilisé dans le dispositif de raccordement de la figure 1, cet ensemble étant représenté en trait plein dans sa position de raccordement et en traits mixtes dans sa position de libération ;
- la figure 3 est une vue en perspective écorchée représentant l'un des mécanismes de mise en tension de l'ensemble illustré sur la figure 2 ;
- la figure 4 est une vue en coupe du mécanisme de la figure 3 selon le plan 4 ; et
- la figure 5 est une vue en perspective illustrant une variante de réalisation d'un mécanisme de mise en tension conforme à l'invention.

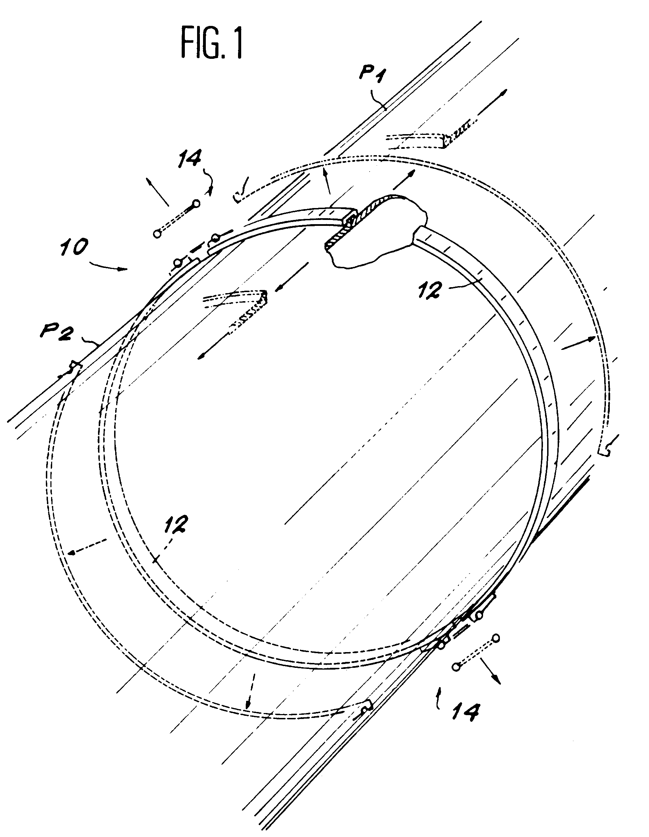

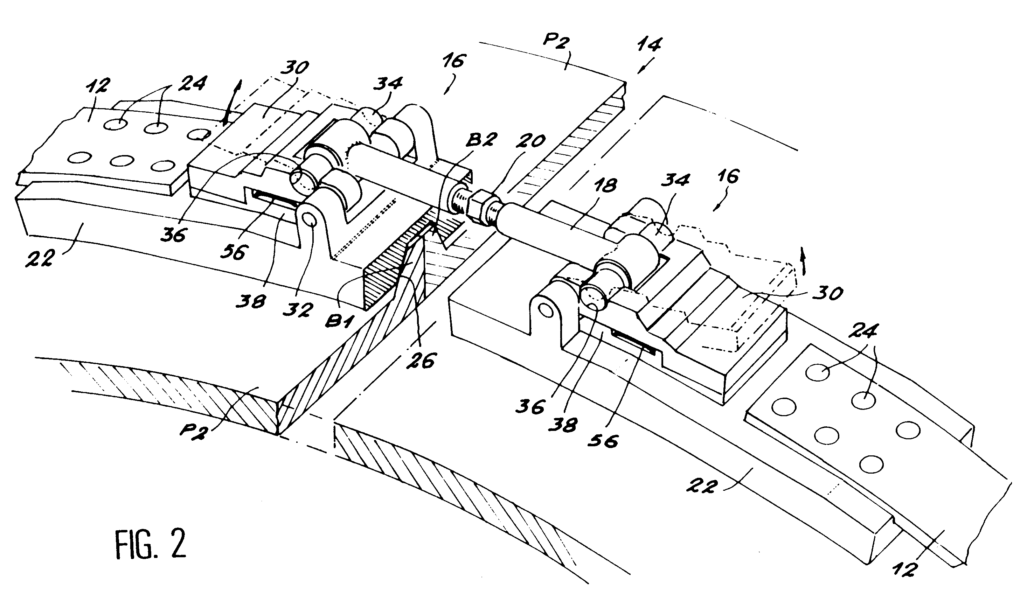

Sur la figure 1, on a désigné de façon générale par la référence 10 un dispositif permettant de raccorder ou de solidariser de façon rigide deux ensembles mécaniques quelconques (non représentés) qui comportent chacun une pièce de raccordement P1, P2 (figure 2) ayant un contour circulaire identique. Il est à noter que le dispositif de raccordement 10 peut également être utilisé dans le cas où le contour des pièces P1 et P2 ne serait pas circulaire, mais formerait une courbe convexe, par exemple de forme ovale.

Plus précisément, dans l'exemple de réalisation représenté sur les figures 1 et 2, les pièces de raccordement P1 et P2 sont des viroles cylindriques dont les bords adjacents raccordés par le dispositif 10 comportent des brides B1 et B2. Il est à noter que l'une de ces brides pourrait être remplacée par un disque obturateur constituant alors, en lui-même, un ensemble mécanique qui est solidarisé d'un autre ensemble muni d'une bride, à l'aide du dispositif de raccordement rigide 10.

Dans l'exemple de réalisation illustré sur la figure 1, ce dispositif de raccordement rigide 10 comporte deux organes souples, constitués dans ce cas par des sangles 12, ainsi que deux ensembles 14 de mise en tension de ces sangles 12. De façon plus précise, chacune des sangles 12 recouvre les brides B1 et B2 sur environ la moitié de leur circonférence et les extrémités adjacentes de ces sangles sont reliées entre elles par les dispositifs de mise en tension 14, qui occupent par conséquent des emplacements diamétralement opposés autour du cercle enveloppe des brides B1 et B2.

Il est à noter que les sangles 12 peuvent être remplacées par tout organe souple tel que des câbles, etc. Par ailleurs, le dispositif de raccordement rigide 10 pourrait ne comprendre qu'une seule sangle dont les extrémités adjacentes seraient reliées par un ensemble unique de mise en tension, ou au contraire un nombre de sangles supérieur à 2, reliées entre elles par autant d'ensembles de mise en tension.

Comme l'illustre plus précisément la figure 2, chacun des ensembles 14 de mise en tension des sangles 12 comporte deux mécanismes 16 de mise en tension identiques, montés en opposition et reliés entre eux par un organe de mise en tension. Cet organe est constitué par une biellette 18, en deux parties reliées entre elles par des moyens de réglage de longueur 20, du type vis-écrou.

Les deux mécanismes de mise en tension 16 constituant chacun des ensembles 14 étant identiques, seul l'un de ces mécanismes va à présent être décrit en se référant aux figures 2 à 4.

Chacun des mécanismes 16 comprend une pièce d'accrochage 22 sur laquelle est fixée, par exemple au moyen de rivets 24, l'extrémité attenante de la sangle 12 correspondante. Sur sa face tournée vers les pièces de raccordement P1 et P2, que l'on appellera face intérieure, la pièce d'accrochage 22 comporte une empreinte 26 complémentaire des brides B1 et B2. Lorsque ces dernières sont logées dans l'empreinte 26 et que les sangles 12 sont maintenues en tension par les ensembles de mise en tension 14, les pièces de raccordement P1 et P2 des deux ensembles mécaniques sont donc solidarisées l'une de l'autre.

Sur sa face opposée à la face intérieure, que l'on appellera par conséquent face extérieure, chacune des pièces d'accrochage 22 porte, dans le prolongement de l'extrémité de la sangle 12, une chape 28, qui supporte de façon pivotante un organe de verrouillage 30, en forme de levier, autour de deux axes 32 alignés, orientés parallèlement à l'axe commun des pièces de raccordement P1 et P2.

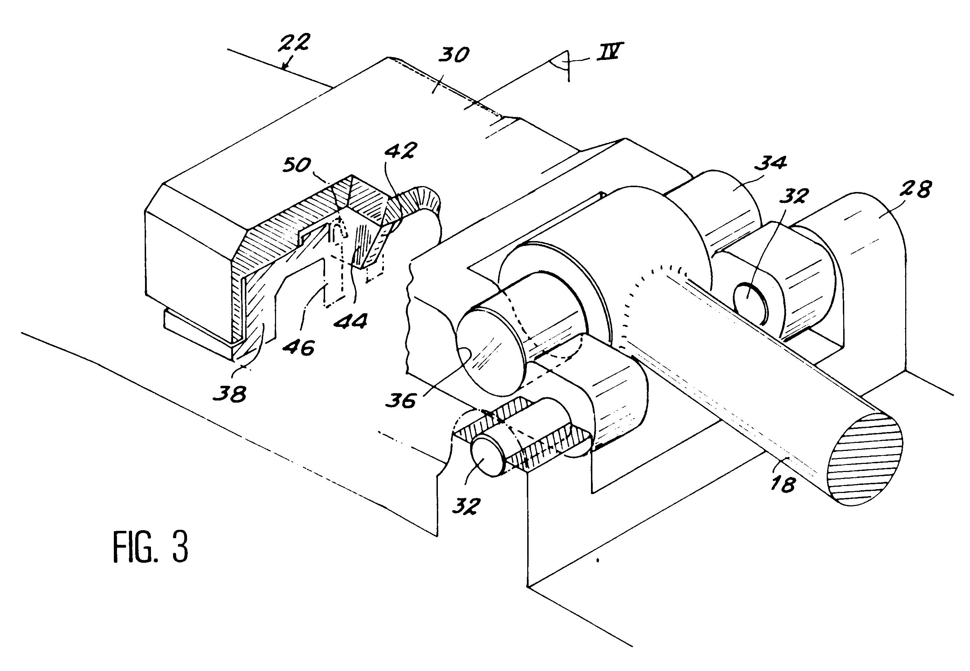

Comme l'illustrent notamment les figures 2 et 3, l'organe de verrouillage 30 est normalement rabattu contre la surface extérieure de la pièce d'accrochage 22, entre la chape 28 et l'extrémité de la sangle 12 accrochée sur cette pièce 22. Cette position rabattue de l'organe de verrouillage 30 correspond à une position angulaire prédéterminée de cet organe par rapport à l'extrémité adjacente de la sangle 12, dans laquelle l'organe 30 est orienté sensiblement tangentiellement à cette extrémité. Le maintien de l'organe de verrouillage 30 dans cette position est assuré par des moyens propres à l'invention, qui seront décrits par la suite.

La partie de l'organe de verrouillage 30 articulée sur la chape 28 par les axes 32 présente la forme d'une fourche dans laquelle pénètre l'extrémité de la biellette 18 assurant la mise en tension de la sangle 12. Cette extrémité de la biellette 18 porte un axe 34, orienté parallèlement à l'axe 32, et reçu de façon pivotante dans une empreinte sensiblement semi-circulaire 36 formée sur la face extérieure de chacune des branches de la partie fourchue de l'organe de verrouillage 30, à proximité des axes 32.

Plus précisément, les empreintes sensiblement semi-circulaires 36 sont situées entre l'axe 32 et l'extrémité de la sangle 12, lorsque l'organe de verrouillage 30 occupe sa position rabattue contre la pièce d'accrochage 22. La forme de ces empreintes 36 est telle que l'axe 34 y reste logé lorsque la sangle 12 est mise en tension au moyen de la biellette 18, tout en permettant à l'axe 34 de sortir de ces empreintes 36 lorsque la tension de la sangle est supprimée.

De plus, il est important d'observer que, lorsque l'organe de verrouillage 30 est rabattu contre la pièce d'accrochage 22, de façon à occuper sa position angulaire prédéterminée, les axes géométriques des axes de pivotement 32 et 34 sont situés dans un plan très proche de l'axe longitudinal de la biellette 18, selon lequel s'exercent les efforts de tension qui transitent par cette biellette. L'organe de verrouillage 30 se trouve donc dans une position angulaire très proche d'une position limite d'équilibre stable, dans laquelle les axes géométriques des axes de pivotement 32 et 34 définissent un plan qui contient l'axe longitudinal de la biellette 18. Il en résulte que les contraintes supportées par les moyens qui permettent de maintenir l'organe de verrouillage 30 dans sa position repliée illustrée en trait plein sur la figure 2 sont très faibles.

Dans un premier mode de réalisation, la position angulaire prédéterminée de l'organe de verrouillage 30, correspondant à sa position rabattue sur la pièce 22, est telle que l'axe géométrique de l'axe de pivotement 34 est légèrement décalé vers l'extérieur par rapport au plan parallèle à l'axe longitudinal de la biellette 18 passant par l'axe géométrique de l'axe de pivotement 32. Par conséquent, l'organe de verrouillage 30 occupe alors une position instable et son maintien n'est assuré que par la présence des moyens de liaison existant entre cet organe 30 et la pièce d'accrochage 22. Dès que ces moyens de liaison sont libérés, la biellette 18 fait pivoter l'organe de verrouillage 30 comme on l'a illustré en traits mixtes sur la figure 2, ce qui a pour effet de libérer le mécanisme de mise en tension 16.

Dans un deuxième mode de réalisation, la position angulaire prédéterminée de l'organe de verrouillage 30 est au contraire une position d'équilibre stable, c'est-à-dire que l'axe géométrique de l'axe de pivotement 34 est décalé vers l'intérieur par rapport au plan parallèle à l'axe longitudinal de la biellette 18 passant par l'axe géométrique de l'axe de pivotement 32. Dans ce cas, des moyens élastiques tels qu'une lame de ressort 56 faiblement tarée (figure 2) sont placés entre la pièce d'accrochage 22 et l'organe de verrouillage 30, de façon à provoquer le pivotement de ce dernier vers la position illustrée en traits mixtes, lorsque les moyens assurant normalement la liaison entre cet organe 30 et la pièce 22 sont libérés.

Dans l'exemple de réalisation illustré sur la figure 2, la lame de ressort 56 est une lame à section en forme de U, logée dans un évidement formé dans un élément 38, rapporté sur la face extérieure de la pièce extérieure 22. La branche intermédiaire de cette lame de ressort 56 prend appui sur la face intérieure de l'organe de verrouillage 30, lorsque celui-ci est replié.

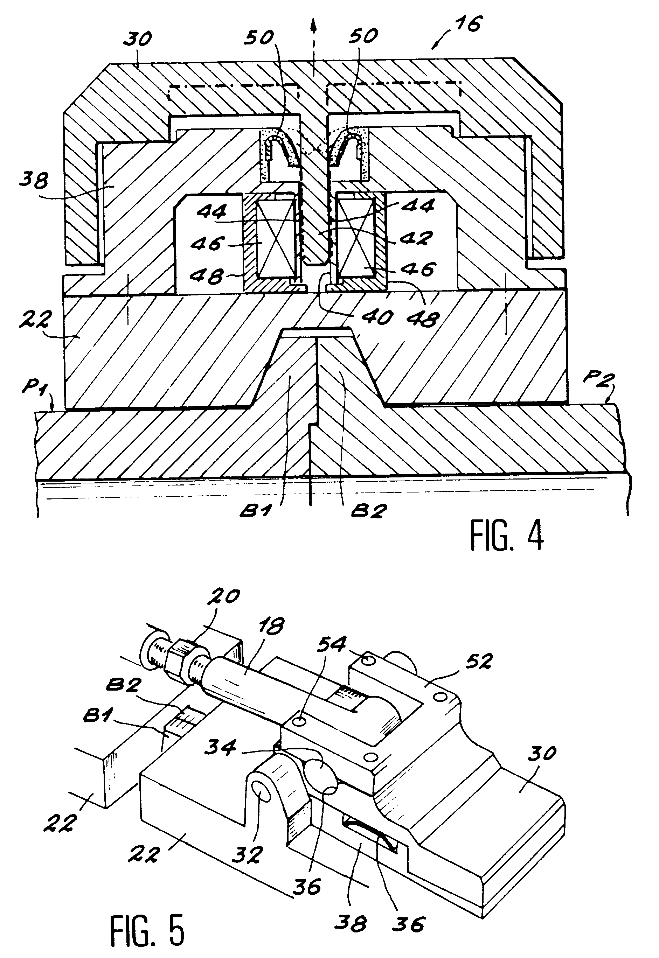

Les moyens de liaison maintenant normalement l'organe de verrouillage 30 dans sa position angulaire prédéterminée, rabattue contre la pièce d'accrochage 22, vont à présent être décrits en se référant aux figures 3 et 4.

Dans sa partie sur laquelle vient se rabattre l'organe de verrouillage 30, la pièce d'accrochage 22 porte sur sa face extérieure l'élément rapporté 38. Dans sa région centrale, au-delà de l'évidement dans lequel est logée la lame de ressort 56, cet élément rapporté 38 comporte une partie en creux 40, dans laquelle est normalement reçue une partie en saillie 42 de l'organe de verrouillage 30. Cette partie en saillie 42 a la forme d'une lame, qui est orientée perpendiculairement à l'axe 34 et dont les flancs sont recouverts d'un matériau de liaison thermo-fusible, tel qu'un alliage d'étain. Le chauffage de ce matériau à une température de fusion peu élevée permet de réaliser une liaison soudée avec les faces latérales de la partie en creux 40 formée dans l'élément rapporté 38.

A l'intérieur de cet élément 38 et de part et d'autre de la partie en creux 40 sont placés deux éléments chauffants 46, tels que des thermistances à coefficient de température positif (thermistances C.T.P.), alimentés en courant électrique par des conducteurs électriques (non représentés). Plus précisément, chacun des éléments chauffants 46 est placé en vis-à-vis de la zone de la partie en saillie 42 qui est recouverte par le matériau thermo-fusible 44. Chaque élément chauffant 46 est en outre monté dans un support isolant 48, en forme de L, dont les deux branches sont placées respectivement du côté de la pièce d'accrochage 22 et à l'opposé de la partie en saillie 42.

La nature du matériau thermo-fusible à coefficient de température positif constituant chacun des éléments chauffants 46 permet de fixer avec précision et de façon reproductible la température maximale qui est atteinte lorsque ces éléments chauffants sont alimentés électriquement. Cette température est choisie afin d'assurer la fusion du matériau thermo-fusible 44 lors du chauffage.

Dans le mode de réalisation représenté sur les figures 3 et 4, deux joints racleurs 50 en vis-à-vis sont montés sur l'élément 38, à l'entrée de la partie en creux 40. Ces joints sont en contact par leurs extrémités avec les flancs de la partie en saillie 42, de telle sorte qu'ils permettent de maintenir le matériau thermo-fusible 44 dans la partie en creux 40, lors de la libération du mécanisme. Lorsque la partie en saillie 42 sort de la partie en creux 40, les deux joints 50 qui se font face viennent au contact l'un de l'autre, de façon à obturer complètement la partie en creux 40.

Pour effectuer le raccordement des deux ensembles mécaniques par leurs pièces de raccordement P1 et P2, on verrouille chacun des mécanismes de mise en tension 16 en chauffant le matériau thermo-fusible 44 par effet Joule, à l'aide des éléments chauffants 46. Chacun des organes de verrouillage 30 est ainsi placé dans sa position repliée, illustrée en trait plein sur la figure 2. Les pièces d'accrochage 22 étant placées de façon à coiffer les brides B1 et B2, les organes de verrouillage 30 des deux mécanismes 16 constituant chaque ensemble 14 de mise en tension sont reliés par la biellette 18, puis les moyens de réglage de longueur 20 sont actionnés, de façon à obtenir la tension désirée dans les sangles 12.

Lorsque la libération des deux ensembles mécaniques reliés par le dispositif de raccordement 10 est souhaitée, du courant électrique est envoyé dans les éléments chauffants 46, ce qui provoque, par effet Joule, la fusion du matériau thermo-fusible 44.

Les organes de verrouillage 30 basculent alors automatiquement, soit directement sous l'effet de la tension emmagasinée dans la biellette 18, soit sous l'effet des moyens élastiques 56 interposés entre les organes 30 et les pièces d'accrochage 22. Les ensembles mécaniques liés aux pièces de raccordement P1 et P2 sont ainsi déconnectés l'un de l'autre.

Si l'on désire éviter que la biellette 18 ainsi que les sangles 12 portant à leurs extrémités les mécanismes 16 ne viennent endommager certains éléments des ensembles reliés par le dispositif 10, des liens appropriés (non représentés) peuvent relier l'une des pièces P1, P2 aux sangles 12 et à la biellette 18.

Dans une variante de réalisation illustrée sur la figure 5, la biellette 18 reste liée aux organes de verrouillage 30 par des pièces 52 fermant les empreintes sensiblement semi-circulaires 36 et fixées, par exemple par des vis 54, sur les organes de verrouillage 30. Dans ce cas, seules les sangles 12 sont reliées à l'une des pièces P1 et P2 par des liens appropriés.

Dans la variante de réalisation illustrée sur la figure 5, la distance existant entre les axes géométriques des axes 32 et 34 doit être suffisante pour que, lors du pivotement des organes de verrouillage 30, les brides B1 et B2 soient totalement dégagées des empreintes 26 formées dans les pièces d'accrochage 22.

Bien entendu, l'invention n'est pas limitée au mode de réalisation qui vient d'être décrit à titre d'exemple, mais en couvre toutes les variantes entrant dans le cadre des revendications. Ainsi, on comprendra tout d'abord que chacun des mécanismes de mise en tension 16 conforme à l'invention peut être utilisé isolément, pour assurer la tension d'un organe souple tel qu'une sangle, un câble, etc. Dans ce cas, l'extrémité de la biellette 18 qui n'est pas articulée sur l'organe de verrouillage 30 de ce mécanisme peut être montée sur une pièce d'ancrage quelconque, fixe ou mobile.

Par ailleurs, dans le dispositif de raccordement rigide décrit, le nombre des ensembles de mise en tension 14 peut être quelconque et chacun de ces ensembles peut ne comprendre qu'un seul mécanisme de mise en tension 16, l'extrémité de la biellette 18 opposée à ce mécanisme étant alors accrochée directement sur l'extrémité adjacente de l'autre sangle 12.

## Revendications

1. Mécanisme de mise en tension (16) d'un organe souple (12), comprenant :
- un organe de verrouillage (30) articulé par un premier axe (32) sur une extrémité de l'organe souple ; et
- un organe de mise en tension (18) articulé par un deuxième axe (34) sur l'organe de verrouillage et relié à une structure d'ancrage (30) ;
ce mécanisme étant caractérisé par le fait qu'il est libérable à distance et comprend, de plus :
- des moyens de liaison thermo-fusibles (44) aptes à maintenir l'organe de verrouillage dans une position angulaire prédéterminée par rapport à ladite extrémité, cette position étant proche d'une position limite d'équilibre stable, dans laquelle le premier axe est placé entre la structure d'ancrage et le deuxième axe, dans un plan contenant ce dernier et dans lequel s'exercent des efforts de tension qui transitent par l'organe de mise en tension ; et
- des moyens de chauffage (46) montés à proximité des moyens de liaison thermo-fusibles et dont un actionnement a pour effet de faire fondre ces derniers.

2. Mécanisme selon la revendication 1, caractérisé par le fait que ladite position angulaire prédéterminée correspond à une position instable.

3. Mécanisme selon la revendication 1, caractérisé par le fait que ladite position angulaire prédéterminée correspond à une position stable, des moyens élastiques (56) agissant sur l'organe de verrouillage (30) pour tendre à le faire tourner autour du premier axe vers une position instable.

4. Mécanisme selon l'une quelconque des revendications précédentes, caractérisé par le fait que l'organe de mise en tension comprend une biellette (18) pourvue de moyens de réglage de longueur (20).

5. Mécanisme selon l'une quelconque des revendications précédentes, caractérisé par le fait que le premier axe (32) est articulé sur une pièce d'accrochage (22) sur laquelle est fixée l'extrémité de l'organe souple, cette pièce comportant une partie en creux (40) dans laquelle est reçue une partie en saillie (42) de l'organe de verrouillage, dans ladite position angulaire prédéterminée.

6. Mécanisme selon la revendication 5, caractérisé par le fait que les moyens de liaison thermo-fusibles comprennent un matériau thermo-fusible (44) interposé entre la partie en creux (40) et la partie en saillie (42).

7. Mécanisme selon la revendication 6, caractérisé par le fait qu'un joint racleur (50) est monté sur ladite pièce d'accrochage (22), à l'entrée de la partie en creux (40), et en contact avec la partie en saillie (42), de façon à maintenir le matériau thermo-fusible (44) à l'intérieur de cette dernière partie.

8. Mécanisme selon l'une quelconque des revendications 5 à 7, caractérisé par le fait que les moyens de chauffage comprennent au moins un élément chauffant (46) monté dans ladite pièce (22), à proximité de la partie en creux (40).

9. Mécanisme selon la revendication 8, caractérisé par le fait que l'élément chauffant (46) est une thermistance à coefficient de température positif.

10. Dispositif de raccordement rigide, libérable à distance, de deux ensembles mécaniques comportant chacun une pièce de raccordement (P1, P2) dont le contour forme une courbe convexe, ce dispositif étant caractérisé par le fait qu'il comprend au moins un organe souple (12) et un ensemble de mise en tension (14) de cet organe, entourant les pièces de raccordement des deux ensembles mécaniques, l'ensemble de mise en tension comprenant au moins un mécanisme de mise en tension (16) selon l'une quelconque des revendications 5 à 9, ladite pièce d'accrochage (22) de ce mécanisme présentant une empreinte (26) dans laquelle sont normalement maintenues les pièces de raccordement.

11. Dispositif selon la revendication 10, caractérisé par le fait que l'ensemble de mise en tension (14) comprend deux mécanismes de mise en tension (16) montés en opposition et reliés entre eux par un organe de mise en tension (18) commun.

12. Dispositif selon l'une quelconque des revendications 10 et 11, caractérisé par le fait qu'il comprend deux organes souples (12) dont des extrémités adjacentes sont reliées entre elles par deux ensembles de mise en tension (14).

13. Dispositif selon l'une quelconque des revendications 10 à 12, caractérisé par le fait que l'articulation de l'organe de verrouillage (30) de chaque mécanisme de mise en tension (16) sur la pièce d'accrochage (22) est ouverte de telle sorte que l'organe de verrouillage cesse d'être relié à la pièce d'accrochage lorsque les moyens de chauffage (46) sont actionnés.

14. Dispositif selon l'une quelconque des revendications 10 à 12, caractérisé par le fait que l'articulation de l'organe de verrouillage (30) de chaque mécanisme de mise en tension (16) sur la pièce d'accrochage (22) est fermée, de telle sorte que l'organe de verrouillage reste relié à la pièce d'accrochage lorsque les moyens de chauffage (46) sont actionnés.

## Claims

1. A tensioning mechanism (16) for a flexible member (12), comprising:
- a locking member (30) articulated by a first axis (32) on one end of the flexible member; and
- a tensioning member (18) articulated by a second axis (34) on the locking member and connected to an anchoring structure (30);
this mechanism being characterised in that it can be released remotely and further comprises:
- heat-fusible connection means (44) able to keep the locking member in a predetermined angular position with respect to the said end, this position being close to a stable equilibrium limit position, in which the first axis is placed between the anchoring structure and the second axis, in a plane containing the latter and in which tensioning forces are effective which pass by way of the tensioning member; and
- heating means (46) mounted close to the heat-fusible connection means and of which the actuation has the effect of causing the latter to melt.

2. A mechanism according to claim 1, characterised in that the said predetermined angular position corresponds to an unstable position.

3. A mechanism according to claim 1, characterised in that the said predetermined angular position corresponds to a stable position, elastic means (56) acting on the locking member (30) to tend to make it turn about the first axis towards an unstable position.

4. A mechanism according to any of the preceding claims, characterised in that the tensioning member comprises a connecting rod (18) provided with length adjusting means (20).

5. A mechanism according to any of the preceding claims, characterised in that the first axis (32) is articulated on a catching piece (22) on which the end of the flexible member is fixed, this piece comprising a hollow part (40) in which a projecting part (42) of the locking member is received, in the said predetermined angular position.

6. A mechanism according to claim 5, characterised in that the heat-fusible connection means comprise a heat-fusible material (44) interposed between the hollow part (40) and the projecting part (42).

7. A mechanism according to claim 6, characterised in that a scraper joint (50) is mounted on the said catching piece (22), at the entrance of the hollow part (40) and in contact with the projecting part (42), in such a way as to keep the heat-fusible material (44) inside this said latter part.

8. A mechanism according to any of claims 5 to 7, characterised in that the heating means comprise at least one heating element (46) mounted in the said piece (22), in the proximity of the hollow part (40).

9. A mechanism according to claim 8, characterised in that the heating element (46) is a thermistor with a positive temperature coefficient.

10. A rigid connection device, which can be released remotely, of two mechanical assemblies each comprising a connection piece (P1, P2) of which the contour forms a convex curve, this device being characterised in that it comprises at least one flexible member (12) and a tensioning assembly (14) for this member, surrounding the connection pieces of the two mechanical assemblies, the tensioning assembly comprising at least one tensioning mechanism (16) according to any of the claims 5 to 9, the said catching piece (22) of this mechanism having a recess (26) in which the connection pieces are normally held.

11. A device according to claim 10, characterised in that the tensioning assembly (14) comprises two tensioning mechanisms (16) oppositely mounted and connected to each other by a common tensioning member (18).

12. A device according to either of claims 10 and 11, characterised in that it comprises two flexible members (12) of which the adjacent ends are connected to each other by two tensioning assemblies (14).

13. A device according to any of claims 10 to 12, characterised in that the articulation of the locking member (30) of each tensioning mechanism (16) on the catching piece (22) is opened in such a way that the locking member ceases to be connected to the catching piece when the heating means (46) are actuated.

14. A device according to any of claims 10 to 12, characterised in that the articulation of the locking member (30) of each tensioning mechanism (16) on the catching piece (22) is closed, such that the locking member remains connected to the catching piece when the heating means (46) are actuated.

## Patentansprüche

1. Mechanismus zur Unterspannungsetzung (16) eines biegsamen Organs (12), umfassend:
- ein Verriegelungsorgan (30), angelenkt mittels einer ersten Achse (32) an einem Ende des biegsamen Organs; und
- ein Organ zur Unterspannungsetzung (18), angelenkt mittels einer zweiten Achse (34) an einem Verriegelungsorgan und verbunden mit einer Verankerungsstruktur (30);
dabei ist dieser Mechanismus
**dadurch gekennzeichnet**, daß er ferngesteuert werden kann und außerdem umfaßt:
- Thermofusion-Verbindungseinrichtungen (44), die das Verriegelungsorgan in einer festgelegten Winkelstellung halten in bezug auf das genannte Ende, wobei diese Stellung einer Grenzstellung des stabilen Gleichgewichts nahekommt, in der die erste Achse sich zwischen der Verankerungsstruktur und der zweiten Achse befindet, in einer Ebene, die diese letztere enthalt und in der sich Spannungskräfte auswirken, die übertragen werden durch das Unterspannungsetzungsorgan; und
- Heizeinrichtungen (46), angebracht in der Nähe der Thermofusion-Verbindungseinrichtungen, die, wenn sie in Betrieb gesetzt werden, die Wirkung haben, diese letzteren zum Schmelzen zu bringen.

2. Mechanismus nach Anspruch 1, dadurch gekennzeichnet, daß die genannte festgelegte Winkelstellung einer instabilen Stellung entspricht.

3. Mechanismus nach Anspruch 1, dadurch gekennzeichnet, daß die festgelegte Winkelstellung einer stabilen Stellung entspricht, wobei elastische Einrichtungen (56) auf das Verriegelungsorgan (30) wirken mit dem Bestreben, es um die erste Achse in eine instabile Stellung zu drehen.

4. Mechanismus nach einem der vorhergehenden Ansprüche, dadurch gekennzeichnet, daß das Unterspannungsetzungsorgan einen Schwingarm (18) umfaßt, vorgesehen als Längenverstelleinrichtung (20).

5. Mechanismus nach einem der vorhergehenden Ansprüche, dadurch gekennzeichnet, daß die erste Achse (32) an einem Befestigungsteil (22) angelenkt ist, an dem das Ende des biegsamen Organs befestigt ist, wobei dieses Teil einen hohlen Teil (40) umfaßt, in dem bei der genannten festgelegten Winkelstellung ein vorstehender Teil (42) des Verriegelungsorgans aufgenommen wird.

6. Mechanismus nach Anspruch 5, dadurch gekennzeichnet, daß die Thermofusion-Verbindungseinrichtungen ein Thermofusionsmaterial (44) enthalten, eingefügt zwischen den hohlen Teil (40) und den vorstehenden Teil (42).

7. Mechanismus nach Anspruch 6, dadurch gekennzeichnet, daß ein Abstreifer (50) angebracht ist an dem genannten Befestigungsteil (22), am Eingang zu dem hohlen Teil (40) und in Kontakt mit dem vorstehenden Teil (42), um das Thermofusionsmaterial (44) im Innern dieses letzteren Teils zu halten.

8. Mechanismus nach einem der Ansprüche 5 bis 7, dadurch gekennzeichnet, daß die Heizeinrichtungen wenigstens ein Heizelement (46) umfassen, angebracht in dem genannten Teil (22), in der Nähe des hohlen Teils (40).

9. Mechanismus nach Anspruch 8, dadurch gekennzeichnet, daß das Heizelement (46) ein Thermistor mit positivem Temperaturkoeffizienten ist.

10. Ferngesteuerte steife Verbindungsvorrichtung von zwei mechanischen Einheiten, von denen jede ein Verbindungsteil (P1, P2) umfaßt, dessen Kontur eine konvexe Kurve bildet, wobei diese Vorrichtung dadurch gekennzeichnet ist, daß sie wenigstens ein biegsames Organ (12) umfaßt und einen Unterspannungsetzungsaufbau (14) dieses Organs, der die Verbindungsteile der beiden mechanischen Einheiten umgibt, wobei der Unterspannungsetzungsaufbau wenigstens einen Unterspannungsetzungsmechanismus (16) nach einem der Ansprüche 5 bis 9 umfaßt und das Befestigungsteil (22) dieses Mechanismus eine Vertiefung (26), in der normalerweise die Verbindungsteile festgehalten werden.

11. Vorrichtung nach Anspruch 10, dadurch gekennzeichnet, daß der Unterspannungsetzungsaufbau (14) zwei Unterspannungsetzungsmechanismen (16) umfaßt, entgegengesetzt angebracht und miteinander verbunden durch ein gemeinsames Unterspannungsetzungsorgan (18).

12. Vorrichtung nach einem der Ansprüche 10 und 11, dadurch gekennzeichnet, daß sie zwei biegsame Organe (12) umfaßt, deren benachbarte Ende miteinander verbunden sind durch zwei Unterspannungsetzungsaufbauten (14).

13. Vorrichtung nach einem der Ansprüche 10 bis 12, dadurch gekennzeichnet, daß die Anlenkung des Verriegelungsorgans (30) von jedem Unterspannungsetzungsmechnismus (16) an dem Befestigungsteil (22) geöffnet ist, so daß das Verriegelungsorgan nicht mehr mit dem Befestigungsteil verbunden ist, wenn die Heizeinrichtungen (46) in Betrieb gesetzt werden.

14. Vorrichtung nach einem der Ansprüche 10 bis 12, dadurch gekennzeichnet, daß die Anlenkung des Verriegelungsorgans (30) von jedem Unterspannungsetzungsmechnismus (16) an dem Befestigungsteil (22) geschlossen ist, so daß das Verriegelungsorgan mit dem Befestigungsteil verbunden bleibt, wenn die Heizeinrichtungen (46) in Betrieb gesetzt werden.
